# EUROPEAN PATENT APPLICATION

(11) **EP 0 720 387 A2**
(43) Date of publication of application: **03.07.1996**
(21) Application number: 95120475.9
(22) Date of filing: 22.12.1995
(51) Int. Cl.: H04N 9/04, H04N 3/15

(54) **Method and apparatus for providing interlaced images from a progressive scan sensor in an electronic camera**

(30) Priority: 30.12.1994 US 367400
(71) Applicant: EASTMAN KODAK COMPANY, Rochester, New York 14650 (US)
(72) Inventor: Parulski, Kenneth A., c/o Eastman Kodak Co., Rochester, New York 14650-2201 (US); Stevens, Eric Gordon, c/o Eastman Kodak Co., Rochester, New York 14650-2201 (US); Lee, Yung-Rai R., c/o Eastman Kodak Co., Rochester, New York 14650-2201 (US); Izumi, Masaki, c/o Eastman Kodak Co., Rochester, New York 14650-2201 (US); Mizukoshi, Seiichi, c/o Eastman Kodak Co., Rochester, New York 14650-2201 (US)
(74) Representative: Schmidt, Peter, Dipl.-Ing.

(57) **Abstract**

Interlaced images are generated in an electronic camera from a progressive scan sensor (20) employing a mosaic color filter array pattern. A timing and control section (27) operates the camera in two modes, including a high quality progressive scan still mode for capture of still images and a pseudo-interlaced video resolution mode for driving a color viewfinder display (10). In the latter mode, the timing and control section (27) enables a fast dump structure (72) on the sensor (20) to eliminate two or more consecutive lines of image charge for every one or more lines of image charge that are transferred to its horizontal register (70) for readout, thereby generating a pattern of lines suitable for interlaced readout. More specifically, the mosaic pattern of the color filter array is preserved in the interlaced readout for faithful color reproduction on the viewfinder display (10).

## Description

### FIELD OF THE INVENTION

The invention pertains to method and apparatus for providing interlaced images from a progressive scan sensor in an electronic camera, and, more particularly, to providing interlaced video motion images from a progressive scan sensor used in an electronic camera that also produces high quality still images.

### BACKGROUND OF THE INVENTION

It is known to alter scanning lines in order to relate the video motion images applied to a monitor to the manner in which an image sensor is driven for other purposes. For instance, U.S. Patent No. 4,928,137 (Kinoshita) shows a still video sensing apparatus of the type that utilizes conventional NTSC video timing for image recording. The sensing apparatus includes an electronic monitor having a number of scanning lines fewer than the vertical picture elements of the image sensor. A driving circuit produces a non-interlaced output in the monitor mode by reading fewer scanning lines in the monitor mode than in an image sensing mode. The reduction of lines is obtained by summing charge in adjacent lines or by inhibiting transfer of alternate fields. This technique is particularly useful in operating a monochrome sensor, or in driving a monochrome viewfinder.

Progressive scan image sensors, such as the Kodak model KAI-0310CM imager, have been developed for high quality color electronic cameras. This sensor has approximately 480 active lines, and approximately 640 active pixels per line. A progressive scan sensor provides a higher quality still image than an interlaced sensor, since all lines are captured during the same interval of time. However, reading out an image from a progressive scan image sensor normally requires a clock rate of approximately twice that used with an interlaced image sensor, if the image is to be read out in the same period of time. For example, an NTSC format interlaced image sensor with 480 lines and 640 pixels per line requires a clock rate of approximately 12.2 MHz to read out the 640 lines in the 52.4 mSec NTSC standard active line time, which provides a field rate of 1/60 second. Since a progressive scan sensor, like the model KAI-0310CM imager, must read out twice as many lines per field, it must use a clock rate of about 24 mHz to read out all 480 lines in 1/60 second. This higher clock rate requires more expensive clock drivers, analog processing, and A/D conversion than interlaced sensors require.

One way to decrease the clock rate is to combine lines of charge from the image sensor. For example, if the image sensor is monochrome or the sensor columns are of the same color (i.e., a stripe color filter array), this can be done by summing two lines into the horizontal readout register, thus providing an interlaced output signal, if the summing is staggered by 1 line on alternate fields. Such a technique is useful in an electronic camera employing a viewfinder display which is used to compose the images (via a relatively low quality "motion" mode) before they are captured (in a much higher quality still mode). However, it is not possible to provide a color image from mosaic or "checker-board" color filter arrays using this technique, since the different color pixels will be summed together.

It is further possible to alter scanning lines by incorporating a selective charge clearing structure on the sensor. For instance, in Serial Number 08/203,237, entitled "Motion/Still Electronic Image Sensing Apparatus," (filed February 28, 1994 on behalf of the same assignee as the present application), charge clearing or "storage" structures are used to selectively discard the signal charge from certain color pixels or to combine the signal charge from nearby pixels to generate images at thirty frames per second while using a standard video rate output pixel clock instead of an HDTV rate pixel clock. In this way the same sensor can be used to generate both motion and still images for recording. Elimination of charge can also produce an interlaced output for a monochrome sensor if the pixels which are eliminated are whole lines staggered by 1 line on alternate fields. However, line elimination is unsuitable for many color filter patterns used on the sensor for color viewfinders. For example, if alternate lines are eliminated from the checkerboard pattern shown below
G R G R
B G B G
G R G R
B G B G
one field will contain only green (G) and red (R) pixels, and the next field will contain only blue (B) and green (G) values. Thus, it is not possible to create a full color image from a single field read-out in this manner. What is needed is a method for reading out the image sensor data in a manner that decreases the required clock rate while providing interlace pixel values for all colors within the same field.

### SUMMARY OF THE INVENTION

The invention was driven by the anomalous situation that the lower image quality operating mode of the system, the motion image processing, requires the higher clock rate, and thus the higher cost parts-clock drivers, analog processing, A/D converters, etc. By recognizing this anomaly, and by further understanding that "perfect" interlace symmetry is unnecessary for typical viewfinder motion applications, a cost-effective solution can be found.

Accordingly, the invention includes an image sensor comprising a two-dimensional array of photosites arranged in rows and columns, a plurality of vertical registers adjacent photosite columns for transferring rows of image charge from the photosites to a horizontal register for readout, and a charge drain structure interposed between the output of the vertical registers and the horizontal register for eliminating complete rows of image charge at a time from the image sensor. A timing and control section controls the charge drain structure so as to eliminate two or more consecutive lines of image charge from the image sensor for every one or more lines of image charge that are transferred to the horizontal register for readout, thereby generating a pattern of lines suitable for interlaced readout.

The advantage of the invention is that it can be used in an electronic camera employing a color viewfinder display to compose the images (via a relatively low quality "motion" mode) at motion video rates without requiring high speed, and high cost, components (which are unnecessary for a much higher quality "still" mode that need not be run at motion video rates).

### BRIEF DESCRIPTION OF THE DRAWINGS

The invention will be described in relation to the drawings, whereon
Figure 1 is a block diagram of an electronic camera incorporating a progressive scan sensor according to the invention;
Figures 2A and 2B are diagrams of progressive scan image sensors useful with the camera of Figure 1;
Figure 3 is a diagram of the Bayer color filter geometry for the sensor used with the camera of Figure 1;
Figure 4 shows a first pseudo-interlace pattern;
Figure 5 shows the line timing for the still mode of operation;
Figures 6A and 6B show the line timing for the first pseudo-interlace pattern shown in Figure 4;
Figure 7 shows a second pseudo-interlace pattern; and
Figure 8 shows the line timing for the second pseudo-interlace pattern shown in Figure 7.

### DETAILED DESCRIPTION OF THE PREFERRED EMBODIMENT

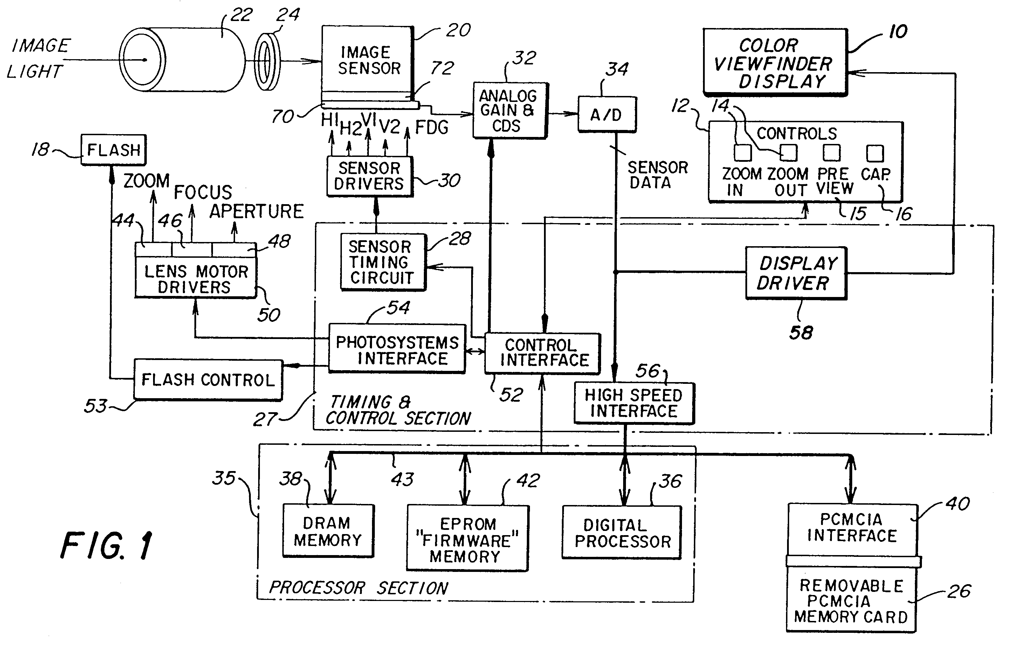

A block diagram of a camera incorporating interlace processing according to the invention is shown in Figure 1. The camera includes an electronic color viewfinder display 10, for example, a color liquid crystal display or a color CRT display, and a user control section 12 having a number of user control buttons, including zoom buttons 14, a preview button 15 and a capture button 16. To take a still picture, the user turns on the camera (using a power switch (not shown), which may be automatically enabled when the user depresses the zoom buttons 14 or the preview button 15, or partially depresses the capture button 16). The user composes the picture by depressing the "zoom in" or "zoom out" buttons 14, and by adjusting the position of the camera, while observing the viewfinder image. When the user is satisfied with the composition on the viewfinder 10, the user depresses the capture button 16. The camera then captures a single still image, firing a flash 18 if necessary when the ambient illumination level is low. The still image is focused upon an image sensor 20 by a motor driven zoom lens 22. The intensity of the image light upon the sensor 20 is regulated by a motor driven mechanical aperture 24, while exposure time is regulated electronically by appropriate clocking of the sensor 20. The still image from the image sensor 20 is processed and digitally stored on a removable memory card 26.

Control of the sensor is provided by a timing and control section 27, which specifically includes a sensor timing circuit 28. The sensor timing circuit 28 provides the signals to enable sensor drivers 30, which provides horizontal clocks (H1, H2), vertical clocks (V1, V2), as well as a signal FDG for activating a drain structure on the sensor 20. The output of the image sensor 20 is amplified and processed in an analog gain and sampling (correlated double sampling (CDS)) circuit 32, and converted to digital form in A/D converter 34. The A/D output signal is provided via a high speed interface 56 to a processor section 35, which includes a digital processor 36 which temporarily stores the still images in a DRAM memory 38. The digital processor 36 then performs image processing on the still images, and finally stores the processed images on the removable memory card 26 via a memory card interface circuit 40, which may use the PCMCIA 2.0 standard interface. An EPROM memory 42 is used to store the firmware which operates the processor 36. The components of the processor section 35 are interconnected through a data bus 43, which also connects to the timing and control section 27 and to the card interface 40.

The motor driven zoom lens 22 includes a zoom motor 44, a focus motor 46, and an aperture motor 48 (all controlled by lens motor drivers 50). The timing and control section 27 further includes a control interface 52 connected to the lens motor drivers 50 and to a flash control circuit 53 via a photosystem interface block 54, which controls the operation of the zoom lens 22 and the flash 18. The lens zoom position is controlled by the photosystem interface block 54 based on position input from the zoom control buttons 14. Sensor data is passed to the processor section 35 through the high speed interface 56 in the timing and control section 27, and is also directed to the viewfinder 10 through a display driver 58.

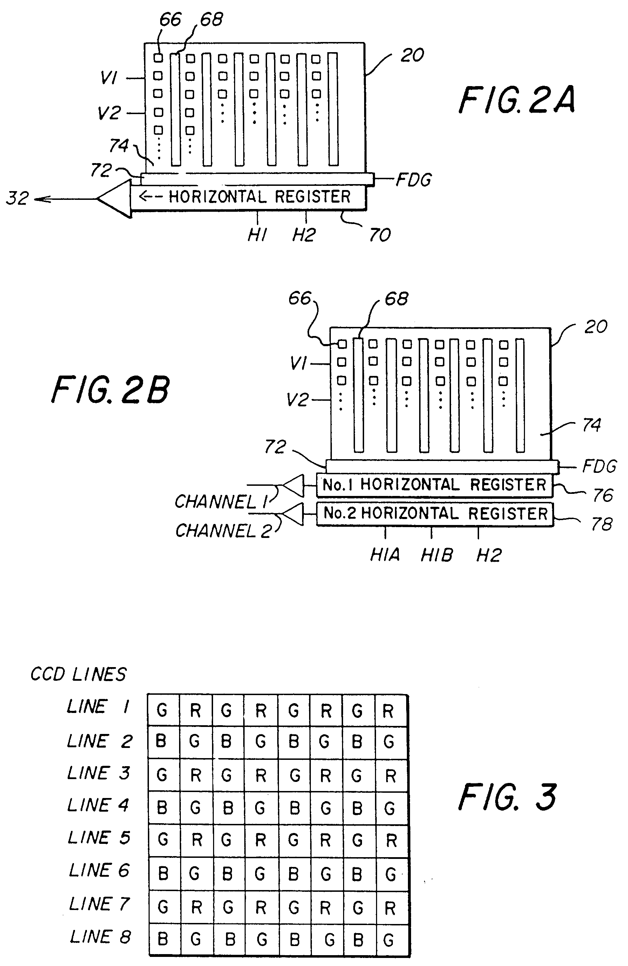

The sensor 20 is a progressive scan interline image sensor (having a noninterlaced architecture), as shown in more detail in Figure 2A. The sensor comprises a two-dimensional array of photosites 66, e.g. photodiodes, arranged in rows and columns, a plurality of vertical registers 68 adjacent photosite columns for transferring rows of image charge from the photosites 66 to a horizontal register 70 for readout, and a charge drain structure (specifically, a fast dump structure 72) interposed between the output of the vertical registers 68 and the horizontal register 70 for eliminating complete rows of image charge at a time from the image sensor 20. A preferred image sensor is the Kodak model KAI-0310CM CCD image sensor, which has approximately 480 active lines with approximately 640 active pixels per line and an image aspect ratio of 4:3. This sensor is described in a Performance Specification document available from Eastman Kodak Company, Rochester, New York. Each pixel measures 9 x 9 µm². The sensor uses a color filter array pattern known as the "Bayer checkerboard" pattern, described in U.S. patent 3,971,065, which is shown in Figure 3. Such a color filter array is characterized by a mosaic pattern in which the filter colors alternate in both line and column directions. In the normal operating mode, all of the pixels on the sensor are transferred to the horizontal register 70, which delivers the image signals to the analog gain and CDS circuit 32 (see Figure 1).

The sensor 20 uses a progressive scan readout method, which allows the entire image to be read out in a single scan. The accumulated or integrated charge for the photodiodes comprising the pixels 66 is transported from the photosites to light protected vertical (parallel) registers 68 by applying a large positive voltage to the phase-one vertical clock (V1). This reads out every row, or line, into the vertical registers 68. The charge is then transported from the vertical registers 68 to the horizontal register 70 by two-phase clocking of the vertical clocks (V1, V2). Between the vertical and horizontal registers is the fast dump structure 72, which is further described in the Performance Specification document for the KAI-0310CM sensor. The fast dump structure 72 includes a fast dump gate and a fast dump drain (not shown separately). By setting a suitable positive potential on a fast dump gate line FDG, charge from the row of pixel values currently adjacent to the fast dump structure 72 is transferred from the CCD channel directly into the fast dump drain rather than to the horizontal register 70. This dump, or line clear, is accomplished during the vertical-to-horizontal transfer time. When properly controlled by the sensor timing circuit 28, the fast dump structure 72 allows lines of charge to be eliminated. (A conventional use of the structure 72 is to eliminate stray charge in the vertical registers 68 during especially long integration times, and just before transfer of image charge to the vertical registers 68.)

As taught by the invention, the timing and control section 27 operates the electronic camera shown in Figure 1 in two modes, including a first, or normal, mode wherein all rows of signal charge corresponding to each line are progressively read out through the horizontal register 70 during a single scan, and a second mode wherein some of the rows of signal charge corresponding to some lines are eliminated through the fast dump structure 72 prior to readout. As applied to the embodiment of Figure 1, the first mode corresponds to a high quality still imaging mode while the second mode corresponds to a "pseudo" interlace scan mode for driving the viewfinder 10. (The second mode is referred to as "pseudo" because the interlace pattern produced is not an evenly spaced pattern.) In the second mode, the timing and control section 27 controls the fast dump structure 72 to eliminate two or more consecutive lines of image charge from the image sensor 20 for every one or more lines of image charge that are transferred to the horizontal register 70 for readout, thereby generating a pattern of lines suitable for interlaced readout. An interlaced video signal comprising two fields is generated either by alternating between two patterns of lines each obtained by eliminating two or more consecutive lines of image charge for every one or more lines of image charge that are transferred to the horizontal register 70, or by simply repeating the line pattern twice. Other applications are possible for the second mode of operation. For instance, the second mode could be used to record motion images in a motion-still electronic camera. As the advantage of the second mode of operation relates to the production of more images per unit of time, the second mode could be used in an electronic still camera to optionally capture and record a burst of still images.

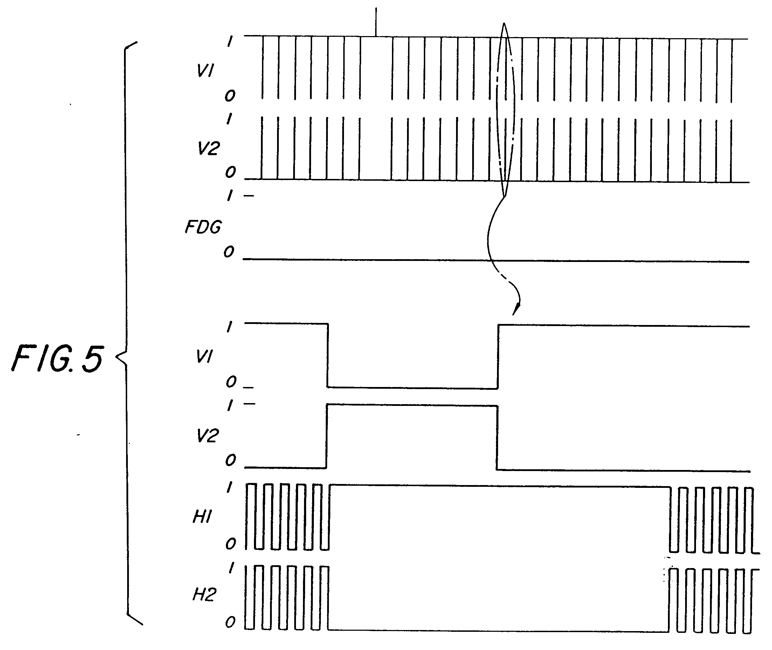

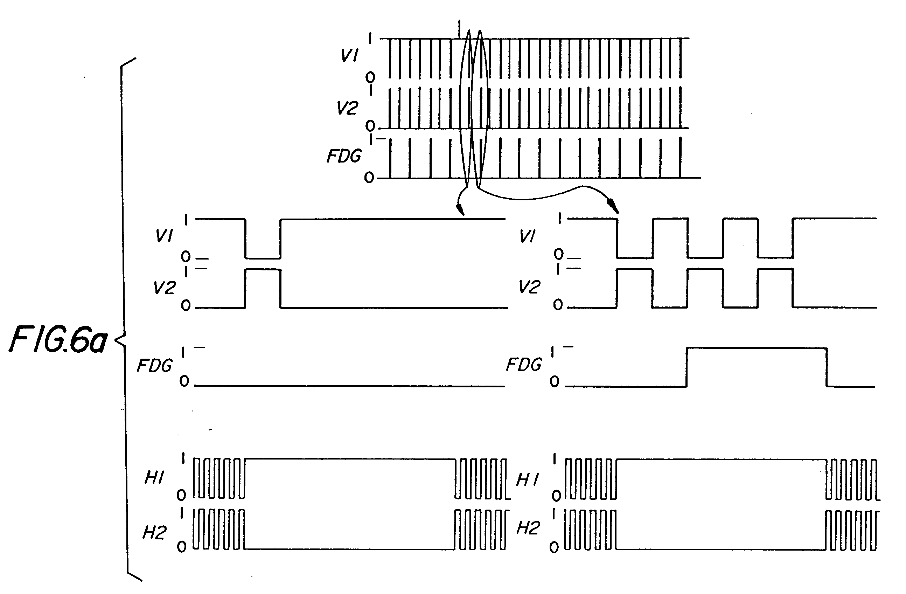

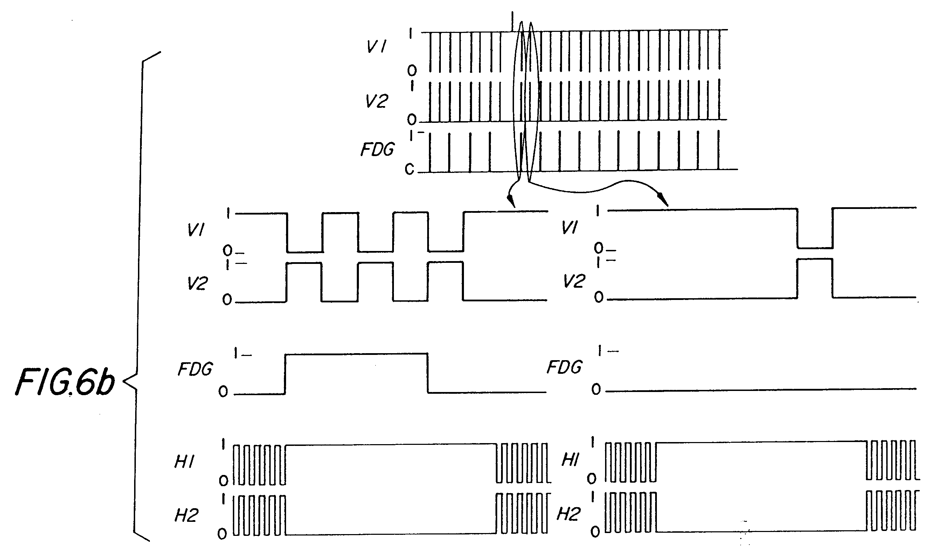

The sensor timing circuit 30 is controlled by the control interface 52 to provide the clock signals V1, V2, H1, H2, and the gate signal FDG according to the two modes of operation. The timing signals for the first mode are shown in Figure 5; those for the second mode are shown in Figure 6a and 6b. The two-phase cycling of signals V1 and V2 control the transfer of lines of image charge from the vertical registers 68 to the horizontal register 70. The two-phase cycling of signals H1 and H2 control the transfer of pixels from the horizontal register 70 to subsequent circuits in the camera. The level of the signal FDG determines whether the image charge is dumped to the fast dump drain or transferred to the horizontal register 70. When the sensor 20 is clocked using the first timing mode shown in Figure 5, all lines of the sensor are clocked out, one after the other, through the horizontal register 70, processed in subsequent camera circuitry, and stored in the removable memory 26. This timing mode provides a high quality progressive scan still image, but may take 1/30 second or longer to read out the still image. Such timing, however, is acceptable for still mode usage, and, as mentioned before, does not require unusually high speed components.

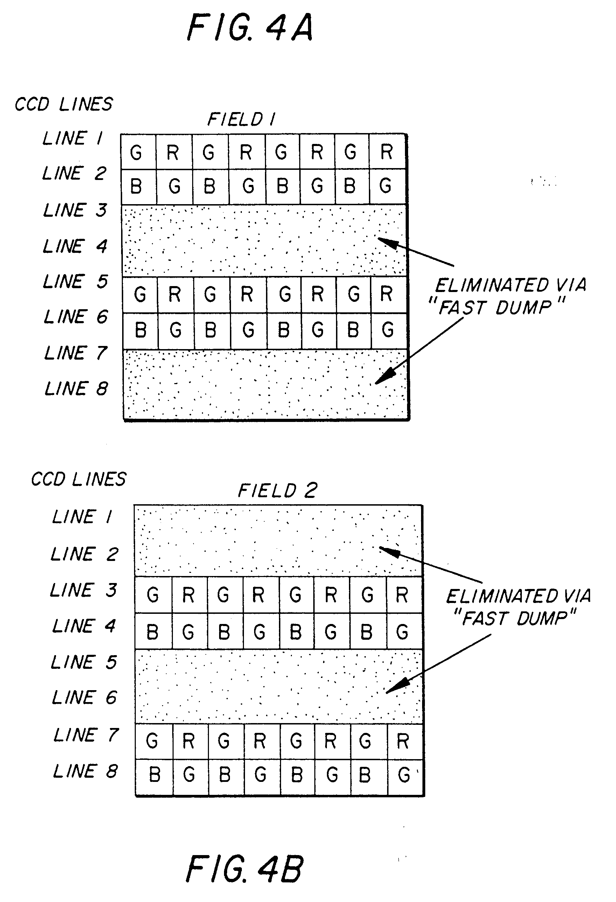

To provide an image to the color viewfinder display 10, a lower resolution image is suitable, but the update rate must be sufficient to provide good motion and eliminate display flicker. An update rate of 60 fields/sec is appropriate. Moreover, the sensor 20 includes the aforementioned array of color filters arranged in a particular color pattern (e.g., the checkerboard Bayer pattern of Fig. 3), and the lines of image charge that are transferred to the horizontal register 70 should preserve that particular color pattern in the pattern of lines that are generated for interlaced readout. To provide this kind of image, the sensor is read out in the second mode as shown in Figure 4, using the timing shown in Figures 6A and 6B. During field one, as shown in Figure 6A, the first two lines (1 and 2) are read out as in the normal mode. These provide a green-red and a blue-green line. The next two lines (3 and 4) are eliminated by turning on the fast dump structure 72 during the time that these lines are transferred past the fast dump structure 72. Next, lines 5 and 6 are read out normally, and then lines 7 and 8 are eliminated. This process proceeds for the 1/60 field time, during which 120 pairs of lines are read out, and 120 pairs of lines are eliminated.

During field two, as shown in Figure 6B, the first two lines (1 and 2) are eliminated by turning on the fast dump structure 72 during the time that these lines are transferred past the fast dump structure 72. The next two lines (3 and 4) are read out as in the normal mode. These provide a green-red and a blue-green line. Next, lines 5 and 6 are eliminated, and lines 7 and 8 are read out normally. This process proceeds for the 1/60 field time, during which the 120 pairs of lines eliminated during field 1 are read out, and the 120 pairs of lines read out during field 1 are eliminated. This mode is called "pseudo-interlace", since the center-to-center spacing between two adjacent lines of the same field is not equal to two lines, as with normal interlace scanning, but alternates between 1 line and 3 lines.

The "pseudo-interlace" readout causes some minor vertical sampling artifacts, but these are not noticeable in most small LCDs or CRT displays. The pixels output for the sensor 20 in pseudo-interlace mode continue to have the Bayer-type color filter repeating pattern, so that they can be processed using the algorithms designed for the Bayer pattern. Moreover, the second field may be simply a repeat of the first field pattern shown in Figure 1; this is particularly appropriate if the color viewfinder display consists of a single-field non-interlaced arrangement of display pixels (e.g., 240 lines of display pixels in a typical liquid crystal display).

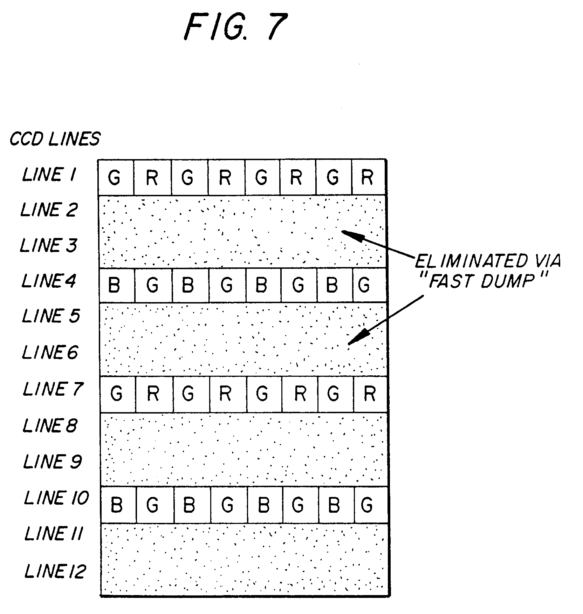

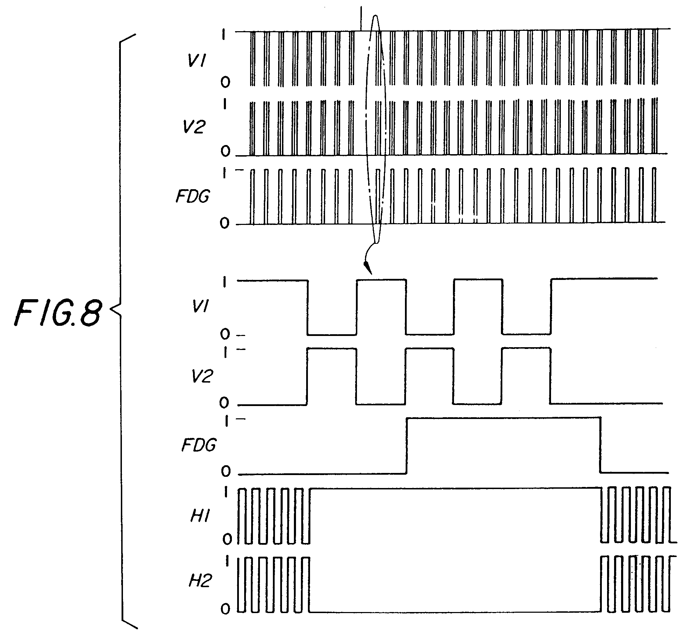

In a second embodiment, the video motion mode vertical subsampling features a center-to-center spacing between two adjacent readout lines of a given field which is always the same for both fields, because an even number of rows of charge are eliminated after each line is read out. Because an even number of lines are skipped, the line readout of the Bayer checkerboard provides the desired green-red, blue-green, green-red, blue-green sequence. An example is shown in Figure 7, where two rows are eliminated after each line is read out. For example, line 1, a green-red line is read out, and then lines 2 and 3 are eliminated via the fast dump structure 72. Next, line 4, a blue-green line is read out, and then lines 5 and 6 are eliminated. The timing diagram is shown in Figure 8. In this example, in order to provide an image with 240 lines per field, the sensor should contain 720 line per frame. Each field is obtained simply by repeating the pattern shown in Figure 7. Alternatively, alternate fields can be offset by alternating the sequence of line dumping, i.e., field one would dump lines 2 and 3, 5 and 6, etc., while field two would dump lines 1 and 2, 4 and 5, etc. To maintain the same image aspect ratio, either the pixel size or the number of pixels per line must be changed.

The invention has been described with reference to a preferred embodiment. However, it will be appreciated that variations and modifications can be effected by a person of ordinary skill in the art without departing from the scope of the invention. For instance, Figure 2B shows a progressive scan sensor with two readout registers 76 and 78 (which corresponds to the Performance Specification document for the KAI-0310CM image sensor; the preferred embodiment of Figure 2A simply uses but one register). The purpose is to double the system speed by having two complete processing channels (analog processing, A/D, etc.); the fast dump structure 72 of such a sensor would be operated as described in connection with foregoing figures to eliminate two or more consecutive lines of charge so as to preserve the color filter array pattern in the interlaced readout. Furthermore, although the Bayer pattern was described, other mosaic-type filter patterns could be used to advantage, for example, complementary patterns involving cyan, magenta, and yellow filters.

The invention is summarized as follows:
1. An electronic camera, comprising:
   an image sensor comprising a two-dimensional array of photosites arranged in rows and columns, a plurality of vertical registers adjacent photosite columns for transferring rows of image charge from the photosites to a horizontal register for readout, and a charge drain structure interposed between the output of the vertical registers and the horizontal register for eliminating complete rows of image charge at a time from the image sensor; and
   a timing and control section for controlling the charge drain structure so as to eliminate two or more consecutive lines of image charge from the image sensor for every one or more lines of image charge that are transferred to the horizontal register for readout, thereby generating a pattern of lines suitable for interlaced readout.
2. An electronic camera as in 1 wherein said timing and control section provides an interlaced video signal by alternating between two patterns of lines each obtained by eliminating two or more consecutive lines of image charge for every one or more lines of image charge that are transferred to the horizontal register.
3. An electronic camera as in 2 wherein said camera further includes an electronic viewfinder, and wherein said interlaced video signal is provided to the electronic viewfinder.
4. An electronic camera as in 2 wherein said camera further provides for recording of motion images, and wherein said interlaced video signal is provided for motion recording.
5. An electronic camera as in 1 wherein the image sensor is a color sensor having an array of color filters arranged in a particular color pattern and wherein the lines of image charge that are transferred to the horizontal register are transferred as fields that preserve the particular color pattern in the pattern of lines that are generated for interlaced readout in each field.
6. An electronic camera as in 5 wherein the array of color filters are arranged in the following mosaic pattern of red, green, and blue filters
   R G R G
   G B G B
   R G R G
   G B G B
   and wherein the lines of image charge that are transferred to the horizontal register for interlaced readout preserve the same mosaic pattern in each field.
7. An electronic camera, comprising:
   a progressive scan image sensor capable of producing an entire image in a single scan in response to clocking signals, said image sensor comprising a two-dimensional array of photosites arranged in rows and columns, a plurality of vertical registers adjacent photosite columns for transferring rows of image charge from the photosites to a horizontal register for readout, and a charge drain structure interposed between the output of the vertical registers and the horizontal register for dumping complete rows of image charge at a time from the image sensor; and
   a timing and control section for producing clocking signals to read out the entire array of photosites in a single scan, said timing and control section further enabling the charge drain structure to dump two or more consecutive lines of image charge for every one or more lines of image charge that are transferred to the horizontal register for readout, thereby generating a pattern of lines suitable for interlaced readout.
8. An electronic camera as in 7 wherein said timing and control section provides an interlaced video signal that are transferred as fields, and wherein said camera is operable in two modes, including a first mode in which the entire array of photosites are read out in a single scan, and a second mode in which said two or more consecutive lines of image charges are dumped by the charge drain structure for every one or more lines of image charge transferred to the horizontal register to provide the interlaced video signal.
9. An electronic camera as in 8 further including an electronic viewfinder, and wherein said interlaced video signal is provided to the electronic viewfinder in the second mode of operation.
10. An electronic camera as in 8 wherein the image sensor is a color sensor having an array of color filters arranged in a particular color pattern and wherein the lines transferred to the horizontal register to provide the interlaced video signal comprise a pattern that replicates the particular color pattern of the array of color filters in each field.
11. An electronic camera as in 10 wherein the array of color filters are arranged in the following mosaic pattern of red, green, and blue filters
   R G R G
   G B G B
   R G R G
   G B G B
   and wherein the lines of image charge that are transferred to the horizontal register for interlaced readout preserve the same mosaic pattern in each field.
12. An electronic camera as in 8 wherein the image sensor is a color sensor having an array of color filters that provides image charge corresponding to several different colors, and the plurality of lines transferred to the horizontal register to provide each field includes all of the several different colors.
13. An electronic camera, comprising:
   a progressive scan sensor having an area image sensing section composed of a plurality of lines and a horizontal readout register for outputting lines of image charge from the image sensing section, both the area image sensing section and the horizontal readout register being arranged on a substrate, said progressive scan sensor also including a fast dump structure arranged between the image sensing section and the readout register for dumping lines of image charge to a drain; and
   a timing and control unit for operating the camera in two modes, including a first mode wherein lines of signal charge corresponding to each line in the image sensing section are progressively read out through the horizontal register and a second mode wherein some of the lines of signal charge corresponding to adjacent lines in the image sensing section are eliminated through the fast dump structure prior to readout.
14. An electronic camera as in 13 wherein said timing and control unit provides an interlaced video signal by alternating between two patterns of lines each obtained by eliminating two or more consecutive lines of image charge for every one or more lines of image charge that are transferred to the horizontal register.
15. An electronic camera as in 14 wherein said camera further includes an electronic viewfinder, and wherein said interlaced video signal is provided to the electronic viewfinder.
16. An electronic camera as in 13 wherein the image sensor is a color sensor having an array of color filters arranged in a particular color pattern and wherein the lines of image charge that are transferred to the horizontal register are transferred as fields that preserve the particular color pattern in the pattern of lines that are generated for interlaced readout in each field.
17. An electronic camera operable in an image capture mode and in a viewing mode, said camera comprising:
   a progressive scan sensor capable of producing an entire color image in a single scan in response to clocking signals, said image sensor having a two-dimensional array of photosites arranged in rows and columns, a plurality of vertical registers adjacent the photosite columns for transferring rows of image charge from the photosites to a horizontal register for reading out a color image signal from the image sensor, a fast dump structure interposed between the outputs of the vertical registers and the horizontal register for draining complete rows of image charge at a time from the image sensor, and a color filter array arranged in a particular mosaic pattern over the photosites;
   a timing control unit for operating the progressive scan image sensor in the two modes, wherein said timing and control unit produces clocking signals in the image capture mode to read out the entire array of photosites in a single scan according to the particular mosaic pattern and in the viewing mode to further enable the fast dump structure to drain some lines of image charge from the sensor while transferring a sequence of lines to the horizontal register for readout that preserves the particular mosaic pattern, thereby generating a pattern of lines suitable for interlaced color readout.
18. An electronic camera as in 17 wherein said timing and control unit provides an interlaced video signal by alternating between two patterns of lines each obtained by eliminating two or more consecutive lines of image charge for every one or more lines of image charge that are transferred to the horizontal register.
19. An electronic camera as in 18 wherein said camera further includes an electronic color viewfinder, and wherein said interlaced video signal is provided to the electronic viewfinder.
20. A method for providing interlaced images from a progressive scan sensor in an electronic camera, the sensor including an array of photosites, an output register, and a charge drain structure interposed between the array of photosites and the output register, said method comprising the steps of:
   transferring image charge line by line from sensor photosites toward the output register;
   draining a regular sequence of lines from the sensor through the charge drain structure, said regular sequence including two or more consecutive lines of image charge for every one or more lines of image charge that are transferred to the horizontal register; and
   outputting the remaining lines from the output register in a pattern of lines suitable for interlaced readout.
21. A method as in 20 further comprising the step of applying the remaining lines from the output register to an electronic viewfinder display.
22. A method as in 20 wherein the sensor is a color sensor employing a mosaic pattern of color filters and wherein the outputting step transfers color fields that maintain the same mosaic pattern in the remaining lines as found on the sensor.

## Claims

1. An electronic camera, comprising:
an image sensor (20) comprising a two-dimensional array of photosites (66) arranged in rows and columns, a plurality of vertical registers (68) adjacent photosite columns for transferring rows of image charge from the photosites to a horizontal register (70) for readout, and a charge drain structure (72) interposed between the output of the vertical registers and the horizontal register for eliminating complete rows of image charge at a time from the image sensor; and
a timing and control section (27) for controlling the charge drain structure (72) so as to eliminate two or more consecutive lines of image charge from the image sensor for every one or more lines of image charge that are transferred to the horizontal register (70) for readout, thereby generating a pattern of lines suitable for interlaced readout.

2. An electronic camera as claimed in claim 1 wherein said timing and control section (27) provides an interlaced video signal by alternating between two patterns of lines each obtained by eliminating two or more consecutive lines of image charge for every one or more lines of image charge that are transferred to the horizontal register (70).

3. An electronic camera as claimed in claim 2 wherein said camera further includes an electronic viewfinder (10), and wherein said interlaced video signal is provided to the electronic viewfinder.

4. An electronic camera as claimed in claim 2 wherein said camera further provides for recording of motion images, and wherein said interlaced video signal is provided for motion recording.

5. An electronic camera as claimed in claim 1 wherein the image sensor (20) is a color sensor having an array of color filters arranged in a particular color pattern and wherein the lines of image charge that are transferred to the horizontal register (70) are transferred as fields that preserve the particular color pattern in the pattern of lines that are generated for interlaced readout in each field.

6. An electronic camera as claimed in claim 5 wherein the array of color filters are arranged in the following mosaic pattern of red, green, and blue filters
R G R G
G B G B
R G R G
G B G B
and wherein the lines of image charge that are transferred to the horizontal register (70) for interlaced readout preserve the same mosaic pattern in each field.

7. An electronic camera, comprising:
a progressive scan image sensor (20) capable of producing an entire image in a single scan in response to clocking signals, said image sensor comprising a two-dimensional array of photosites (66) arranged in rows and columns, a plurality of vertical registers (68) adjacent photosite columns for transferring rows of image charge from the photosites to a horizontal register (70) for readout, and a charge drain structure (72) interposed between the output of the vertical registers and the horizontal register for dumping complete rows of image charge at a time from the image sensor; and
a timing and control section (27) for producing clocking signals to read out the entire array of photosites in a single scan, said timing and control section further enabling the charge drain structure (72) to dump two or more consecutive lines of image charge for every one or more lines of image charge that are transferred to the horizontal register (70) for readout, thereby generating a pattern of lines suitable for interlaced readout.

8. A method for providing interlaced images from a progressive scan sensor in an electronic camera, the sensor (20) including an array of photosites (66), an output register (70), and a charge drain structure (72) interposed between the array of photosites and the output register, said method comprising the steps of:
transferring image charge line by line from sensor photosites (66) toward the output register (70);
draining a regular sequence of lines from the sensor through the charge drain structure (72), said regular sequence including two or more consecutive lines of image charge for every one or more lines of image charge that are transferred to the horizontal register (70); and
outputting the remaining lines from the output register (70) in a pattern of lines suitable for interlaced readout.

9. A method as claimed in claim 8 further comprising the step of applying the remaining lines from the output register (70) to an electronic viewfinder display (10).

10. A method as claimed in claim 8 wherein the sensor (20) is a color sensor employing a mosaic pattern of color filters and wherein the outputting step transfers color fields that maintain the same mosaic pattern in the remaining lines as found on the sensor.
